# EUROPEAN PATENT SPECIFICATION

(11) **EP 2 949 080 B1**
(45) Date of publication and mention of the grant of the patent: **17.01.2018**
(21) Application number: 14743018.5
(22) Date of filing: 22.01.2014
(51) Int. Cl.: H04L 12/24, H04L 29/08

(54) **LOAD BALANCING AMONG SERVERS IN A MULTI-DATA CENTER ENVIRONMENT**
LASTAUSGLEICH ZWISCHEN SERVERN IN EINER UMGEBUNG MIT MEHREREN DATENZENTREN
ÉQUILIBRAGE DE CHARGES PARMI LES SERVEURS D'UN ENVIRONNEMENT MULTI-CENTRES DE DONNÉES

(30) Priority: 25.01.2013 CN 201310033043
(43) Date of publication of application: 02.12.2015
(73) Proprietor: Hewlett Packard Enterprise Development LP, Houston, TX 77070 (US)
(72) Inventor: LV, Zhenfeng, Beijing 100085 (CN); SUN, Songer, Beijing 100085 (CN)
(74) Representative: Holt, Daniel Richard
(86) International application number: PCT/CN2014/071082
(87) International publication number: WO 2014/114230

(56) References cited:
- WO-A2-2008/112694
- CN-A- 101 170 452
- CN-A- 101 222 424
- CN-A- 101 325 552
- US-B1- 7 254 626
- ZEUS TECHNOLOGY LIMITED: "ZXTM BLG, Scaling your services with ZXTM Global Load Balancer", INTERNET CITATION, 30 June 2007 (2007-06-30), XP002466005, Retrieved from the Internet: URL:http://www.zeus.com/documents/en/Sc/Sc aling_with_ZXTM_GLB.pdf [retrieved on 2008-01-24]

## Description

### BACKGROUND

Under global load balancing (GLB), a GLB device is used to allocate traffic for servers in multiple data centers in a wide area network (WAN). The GLB device is also used to lead a client request for access to a data center to a data center with the best performance among multiple data centers distributed on the Internet. In order to fulfill the user request, the GLB device usually directly detects and collects various performance parameters of servers in a data center. In instances in which there are a relatively large number of servers within each data center in the multi-data center environment, multiple GLB devices have been employed to detect performance of the servers in each data center.

US Patent US7254626 B1 discloses a global server load-balancing (GSLB) switch that serves as a proxy to an authoritative DNS and communicates with site switches that are coupled to host servers.

Document "ZEUS TECHNOLOGY LIMITED: "ZXTM BLG, Scaling your services with ZXTM Global Load Balancer", 30 June 2007 (2007-06-30), XP002466005, discloses a DNS-based Global Server Load Balancing system.

### BRIEF DESCRIPTION OF THE DRAWINGS

For a better understanding of the present application, reference should be made to the Detailed Description below, in conjunction with the following drawings in which like reference numerals refer to corresponding parts throughout the figures.

FIG.1 is a schematic diagram illustrating a device network of multiple data centers according to an example of the present disclosure.
FIG.2 is a flow diagram illustrating a method for load balancing among a plurality of servers in a multi-data center environment, according to an example of the present disclosure.
FIG.3 is a flow diagram illustrating a method for load balancing among a plurality of servers in a multi-data center environment, according toanother example of the present disclosure.
FIG.4 is a block diagram illustrating a simplified hardware architecture of a GLB device, according to an example of the present disclosure.
FIG.5 is a functional flow diagram illustrating a logical structure of a device for load balancing among a plurality of servers positioned at a plurality of data centers, according to an example of the present disclosure.

### DETAILED DESCRIPTION

Reference will now be made in detail to examples, which are illustrated in the accompanying drawings. In the following detailed description, numerous specific details are set forth in order to provide a thorough understanding of the present application. Also, the figures are illustrations of an example, in which modules or procedures shown in the figures are not necessarily essential for implementing the present application. In other instances, well-known methods, procedures, components, and circuits have not been described in detail so as not to unnecessarily obscure aspects of the examples. As used herein, the term "includes" means includes but not limited to, the term "including" means including but not limited to. The term "based on" means based at least in part on. In addition, the terms "a" and "an" are intended to denote at least one of a particular element.

In practical applications, in contrast to a server load balancing (SLB) device providing load balancing services for a group of servers on a separate node, the GLB device provides load balancing services for different server groups in a plurality of regions, e.g., in different data centers. There are multiple ways to implement load balancing, including Domain Name System (DNS) redirection, HyperText Transfer Protocol (HTTP) redirection, IP routing redirection, and so on. The multiple ways to implement load balancing mainly determine the best service data center by adopting intelligent strategies, thus the service availability and system performance may be improved. The determination as to which intelligent strategy is to be adopted for selecting the optimal service data center and whether the selection result is timely and accurate largely depends on how the GLB device detects and collects the performance data of servers of multiple data centers.

In view of the above, in an example provided by the present disclosure, a GLB device, instead of directly detecting performance data of servers within each data center, takes a SLB device within a data center as an agent detector, and gathers performance data of each server within the data center through the SLB devices. Thus, the basis for selecting a server with the optimal performance, e.g., highest performance, may be provided to the GLB device, and the GLB device may not need to implement a large number of server detections. In addition, as discussed herein, it only needs relatively few or a single GLB device to meet the requirements of server performance detection, while balancing loads among a relatively large number of servers in different regions without substantially affecting the performance of the GLB device. The GLB device disclosed herein may also meet the server performance requirements even in environments in which the servers in different regions are separated from each other by relatively large distances, e.g., hundreds or thousands of miles.

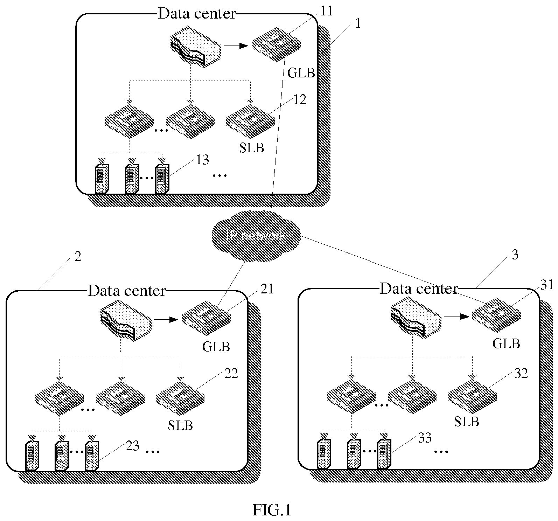

FIG.1 is a schematic diagram illustrating a device network of multiple data centers according to an example of the present disclosure. In the device network depicted in FIG.1, a service provider may set up multiple data centers in multiple different locations, for instance, the data center 1, data center 2 and data center 3, and each data center may include at least one SLB 12, 22, 32 and provide multiple servers 13, 23, 33 for providing a variety of services to users. In the example, each data center has a GLB 11, 12, 13, and each GLB device may receive detection results of performance of the servers from the SLB devices in the data center where the GLB device is located and synchronize, e.g., periodically synchronize, detection information with other GLBs in other data centers, or the SLB devices in each data center may send detection results of performance of the servers in the data center where the SLB device is located to all GLB devices, that is, each GLB device may directly receive detection results of performance of the servers in the multiple data centers from the SLB devices in the multiple data centers, and then each GLB device may implement an algorithm to determine which of the servers in the multiple data centers has the highest, e.g., optimal, performance according to performance parameters of servers in the multiple data centers. When a user in a region submits an access request, according to an example of the present disclosure, the GLB device may select the server with the highest, e.g., optimal, performance to provide services to the user. Broadly, it may be understood that each GLB receive detection results of performance of the servers in the multiple data centers from the SLB devices in the multiple data centers.

In another example of the present disclosure, some data center among multiple data centers may have no GLB device, and SLB devices in the data center may submit detection results of performance of servers in the data center to a GLB device which is located at other data center. In yet another example of the present disclosure, some data center among multiple data centers may have more than one GLB device.

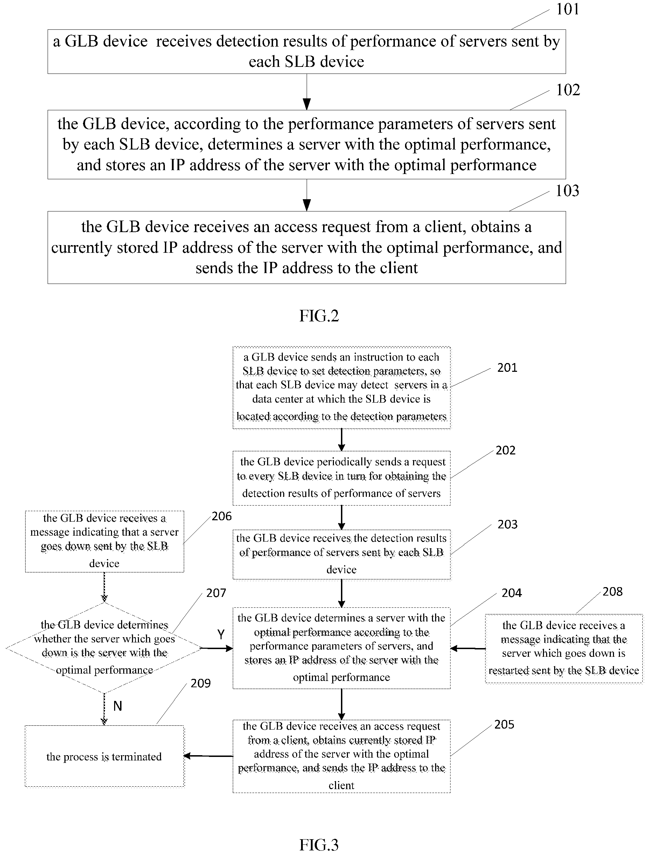

FIG.2 is a flow diagram illustrating a method for load balancing among a plurality of servers in a multi-data center environment by a GLB device, according to an example of the present disclosure. The method may be applied to a multi-data center environment under which the load balancing is performed through the GLB device, where each data center includes at least one SLB device and several servers providing different applications. As shown in FIG.2, the method may include the following operations.

In block 101, a GLB device may receive detection results of performance of the servers sent by each of a plurality of SLB devices. The detection results may include a performance parameter and a corresponding IP address of each server.

In block 102, the GLB device, according to the performance parameters of the servers sent by the SLB devices, may determine which server of the plurality of servers has the highest performance, e.g., optimal performance, and may store the IP address of the server determined to have the highest performance.

In block 103, the GLB device may receive an access request from a client, may obtain a currently stored IP address of the server determined to have the highest performance, and may send the IP address of that server to the client.

FIG.3 is a flow diagram illustrating a method for load balancing among a plurality of servers in a multi-data center environment by a GLB device, according to another example of the present disclosure. The method may be applied to a multi-data center environment under which the load balancing is performed through a GLB device, where each data center includes at least one SLB device and several servers providing different applications. As shown in FIG.3, the method may include the following operations.

In block 201, a GLB device may send an instruction to each of the SLB devices to set detection parameters, in which each of the SLB devices is to detect the results of performance of the servers in a data center at which the SLB device is located according to the detection parameters.

Specifically, in block 201, the detection parameters may include the detection method, the time of timeout period, the number of retries, and the like. The detection parameters may define a process that the SLB device implements to detect servers, and one or more requirements put forward by the GLB device on the detection performed by the SLB device in the time dimension and other dimensions. After receiving the instruction sent by the GLB device, each SLB device may obtain detection parameters in the instruction so as to perform an initialization configuration, start the performance detection of servers in the data center at which the SLB device is located according to the detection parameters, and store a detection result.

In block 202, the GLB device may periodically send a request to each of the SLB devices in turn to obtain the detection results of performance of servers.

Specifically, the detection results of performance of one server may include parameters of performance of the server directly obtained by a SLB device after the detection. For example, the parameters may include CPU usage rate and memory usage rate of each server. In addition, besides the parameters of performance of the server directly obtained by the SLB device, the detection results may further include indirect parameters calculated according to a certain algorithm on the basis of the direct parameters obtained by the SLB device through above mentioned detection. The algorithm may be a ratio algorithm, a response speed algorithm, a least-connection algorithm, or the like.

In block 203, the GLB device may receive the detection results of performance of servers sent by each SLB device. That is, for instance, after receiving an instruction sent by the GLB device to report detection results of performance of the servers, the SLB devices may report the detection results of performance of the servers to the GLB device according to the instruction sent by the GLB device. The detection results reported by the SLB devices may include specific performance parameters and corresponding IP addresses of each server.

In block 204, the GLB device may determine which server has a highest performance through implementation of an algorithm for selecting the highest performing server, e.g., the optimal server of the plurality of servers, according to the performance parameters of the servers sent by the SLB devices, and may store an IP address of the server determined to have the highest performance for subsequent usage.

In block 205, the GLB device may receive an access request from a client, may obtain the currently stored IP address of the server having the highest performance, and may send the IP address of that server to the client.

In the example, when each data center has a GLB device, each GLB device may firstly communicate with SLB devices in the data center where the GLB device is located in above blocks 201 to 202, and receive detection results of performance of the servers from the SLB devices in the data center where the GLB device is located, and synchronize detection information with other GLB devices in other data centers in above block 203. Broadly, it may be understood that each GLB receive detection results of performance of the servers in the multiple data centers from the SLB devices in the multiple data centers. Or, each GLB device may communicate with all SLB devices in the multiple data centers in above blocks 201 to 203, in this way, the GLB device does not need to synchronize detection information with other GLB devices. When the multiple data centers have only one GLB, the GLB directly communicate with all SLB devices in the multiple data centers in above blocks 201 to 203. When some data center among the multiple data centers have no GLB device, a GLB device in another data center may communicate with SLB devices in the data center, and receive detection results of performance of servers in the data center submitted by the SLB devices in the data center. When some data center among multiple data centers may have more than one GLB device, each GLB device in the data center may perform the same operations. Thus, in above block 204, the GLB may determine a server having a highest performance among servers in the multiple data centers.

In the example, when each data center has a GLB device, each GLB device may communicate with SLB devices in the data center where the GLB device is located in above blocks 201 to 203, then in above block 204, the GLB may determine a server having a highest performance among servers in the data centers where the GLB device is located.

In practical applications, because the IP address currently accessed by the client may not be the IP address of the server having the highest performance, in order to achieve the load balancing among servers and obtain maximized efficiency of the servers in the multi-data center environment, the client may be led to access the IP address of the server having the highest performance.

It should be noted that the above-mentioned blocks 201 and 202 may be omitted without departing from a scope of the method depicted in FIG.3. The GLB device may send an instruction to the SLB devices to trigger the SLB devices to execute the subsequent processes. In some examples, the GLB device may not send the instruction, and the detection and which parameters are to be detected by the SLB devices may be pre-defined.

A server may malfunction or otherwise fail because of various factors, such as hardware and software failure or a power outage. When a server malfunctions, a client connected with the server may initiate a reconnection request at the session layer through the upper layer protocol. In this case, it may be necessary for the GLB device to avoid further calling to the malfunctioning server to provide services to the client during the process of handling the new access initiated by the client. Therefore, in another example of the present disclosure, the above-mentioned method may further include the processing procedures of unexpected situations, such as a server malfunction or a server malfunction recovery. The procedures may include the following.

In block 206, the GLB device may receive a message sent by a SLB device indicating that a server has malfunctioned.

When detecting that a server has malfunctioned, without waiting for an instruction sent by the GLB device, a SLB device may generate a message indicating that a server has malfunctioned, and may initiatively send the message to the GLB device, so as to make the GLB device immediately aware of the status change of malfunctioning server.

In block 207, the GLB device may determine whether the server that has malfunctioned is the server determined to have the highest performance. In addition, in response to a determination that the server that has malfunctioned is the server determined to have the highest performance, block 204 may be performed by the GLB device to re-determine which of the functioning servers has the highest performance. However, in response to a determination that the server that has malfunctioned is not the server determined to have the highest performance, block 209 may be performed to terminate the process.

In response to a determination that the server that has malfunctioned is the server determined to have the highest performance, the GLB device may re-determine which of the functioning servers has the highest performance through implementation of an algorithm for selecting the highest performing server. When a new access request sent by a client is received, the GLB device may send the IP address of the re-determined server having the highest performance to the client. Conversely, when the server that has malfunctioned is not the server determined to have the highest performance, the GLB device may ignore the message indicating that the server has malfunctioned because the message may not influence the current services provided to clients by the GLB device, and the process may be terminated.

In block 208, the GLB device may receive a message from a SLB device indicating that the server that has malfunctioned has been restarted. In addition, the GLB device may perform block 204 to re-determine which of the servers has the highest performance. If it is determined that the restarted server has the highest performance according to a calculated result, when a client sends an access request, the GLB device may send the IP address of the restarted server to the client.

The interactive messages between the above-mentioned GLB device and the SLB devices may be carried in various protocol messages. For instance, the interactive messages may be carried in messages that use a private protocol or an improved public protocol. Specifically, in an example of the present disclosure, the format of the messages may be the JavaScript Object Notation (JSON) format. An example of specific contents included in a message may be as follows.

{ "Version": "1.0", "Type":1, "slb_name": "Beijing_lb1", "vs_name": "web_server1", "vs_ip": "10.10.0.1","vs_port":"80", "monitor_method": "icmp" , "enable_statue": "enable", "monitor_result": "50ms","monitor_lasttime": "201209271500348", }

In the example above, "Version" may represent the version number, the value of which may be 1.0, 1.1, etc.

"Type" may represent the message type, the value of which may be 1, 2, 3 and 4, which may respectively denote Set, Get, Response, and Notification, these message types will be described in detail with respect to table 1 below.

"Slb_name" may represent the name of a SLB device, which may be selected by the GLB device to perform the detection.

"Vs_name" may represent the name of a virtual server. Many servers in a data center may be virtual servers generated through virtualization technologies, and one physical server may be virtualized into multiple virtual servers.

"Vs_ip" may represent the IP address of the virtual server.

" Vs_Port" may represent the port of the virtual server.

"Monitor_method" may represent the method for monitoring performance of the virtual server. The method may be "icmp", "http", "udp", "tcp", etc.

"Enable_status" may represent whether the status is an enable status, namely whether the monitor is started. The value of the enable status may be "disable" or "enable".

"Monitor_result" may represent the detection result, for example, the response time "50ms", the server has malfunctioned "down", the server has been restarted "up", or the like.

"Monitor_lasttime" may represent the last detection time.

The definitions of message types are shown in table 1.

| Message type | Description |
|---|---|
| Set | The GLB device sends a setting instruction to the SLB device to set detection parameters of the SLB device. |
| Get | The GLB device sends an inquiry instruction to the SLB device to obtain performance parameters of servers from the SLB device. |
| Response | The SLB device makes responses to the setting instruction message and the inquiry instruction message of the GLB device. A response message may include whether the initialization configuration of detection parameters is successful, or performance parameters of servers. |
| Notification | When there is an emergency situation, the SLB device actively sends the GLB device a notification message, such as a message indicating that a server has malfunctioned, or a message indicating that a server has been restarted. |

As can be seen from above-description, according to an example, a SLB device may be operated as an agent detector of the GLB device to detect performance of servers in each data center. In one regard, the use of the SLB devices as disclosed herein may reduce the burden of the GLB device by not requiring an increase in hardware resources of the GLB device and by not requiring an optimization of active detection methods. According to an example, detection tasks are converted from relatively centralized processing executed by the GLB device to the distributed processing executed by SLB devices. Thus, the rich processing resources of the SLB devices may be made full use of, and the resource consumption of the GLB device may be reduced. The transformation of the overall design scheme in the software level may be easily achieved. Subsequently, the full utilization of existing resources may be achieved, and performance of all of the servers in multiple data centers may be fully and effectively monitored.

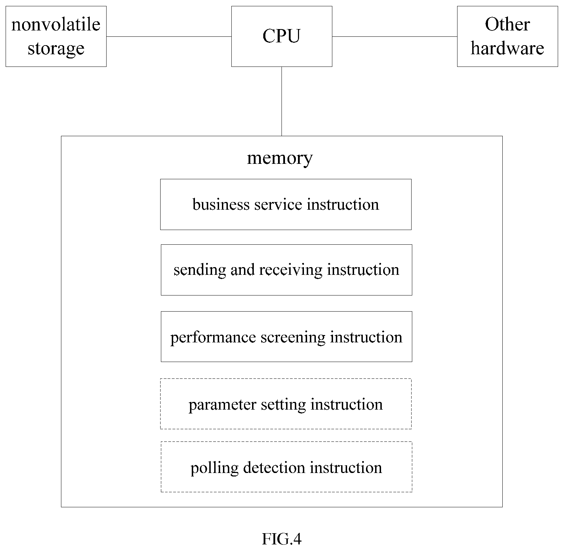

FIG.4 is a block diagram illustrating a simplified hardware architecture of a GLB device according to an example of the present disclosure. It should be understood that the GLB device may also be achieved through utilization of more complex hardware architectures. As shown in FIG.4, the GLB device may include a central processing unit (CPU), a memory, a nonvolatile storage, and other hardware. The CPU may have a communication connection with other components.

The nonvolatile storage may store machine readable instructions for implementing the load balancing among multiple data centers.

The CPU may load the machine readable instructions stored in the nonvolatile storage into the memory, and may run the machine readable instructions to generate corresponding computer executable instructions. The computer executable instructions may include a business service instruction, a sending and receiving instruction and a performance screening instruction.

The business service instruction may cause the processor to receive an access request sent by a client, obtain a currently stored IP address of a server determined to have with the highest performance, and send the IP address of the determined server to the client. Specifically, the IP address of the determined server may be sent to the client via a redirect message, or may be sent to the client in response to receipt of an inquiry request from the client.

The sending and receiving instruction may indicate: performing information interaction with SLB devices, which may cause the processor to: receive detection results of performance of servers sent by the SLB devices and send various instructions to the SLB devices. The detection results may include a performance parameter and a corresponding IP address of each server. The sending and receiving instruction may further cause the processor to: receive a message sent by a SLB device indicating that a server has malfunctioned, or a message sent by a SLB device indicating that the malfunctioned server has been restarted.

The performance screening instruction may cause the processor to: according to performance parameters of servers received when the sending and receiving instruction is executed by the CPU, determine a server having the highest performance through implementation of an algorithm for selecting the highest performing server, and storing an IP address of the server having the highest performance, such that the IP address of the server may be called by the business service instruction. The IP address of the server may be stored in the memory.

Furthermore, the performance screening instruction may further cause the processor to: according to a message received from a SLB device indicating that a server has malfunctioned when the sending and receiving instruction is executed by the CPU, determine whether the server that has malfunctioned is the server with the highest performance. In response to the server that has malfunctioned being the server with the highest performance, the performance screening instruction may further cause the processor to re-determine which server of the functioning servers has the highest performance according to performance parameters of current servers, and the IP address of the re-determined server may be stored in the memory. In response to the server that has malfunctioned not being the server with the highest performance, the performance screening instruction may further cause the processor to ignore the message indicating that a server has malfunctioned because the message may not influence the current services provided to clients by the GLB device. Similarly, the performance screening instruction may further cause the processor to: according to a message sent by a SLB device indicating that the server that has malfunctioned has been restarted, re-determine which server has the highest performance according to the obtained performance parameters of the currently functioning servers, and an IP address of the re-determined server may be stored in the memory.

In addition, the above-described computer executable instructions may further include a parameter setting instruction and a polling detection instruction.

The parameter setting instruction may cause the processor to send an instruction to each SLB device to set detection parameters, in which each SLB device is to detect the results of performance of the servers in a data center at which the SLB device is located according to the detection parameters.

The polling detection instruction may cause the processor to periodically send a request to each SLB device in turn to obtain the detection results of performance of servers.

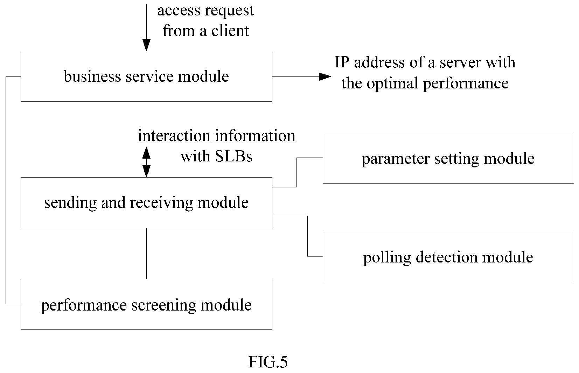

FIG.5 is a functional flow diagram illustrating a logical structure of a device for load balancing among a plurality of servers positioned at a plurality of data centers, according to an example of the present disclosure. The load balancing device may be a device abstracted from software running in the hardware architecture shown in FIG.4. The load balancing device may be applied to a multi-data center environment, where each data center site includes a SLB device and several servers providing different applications. As shown in FIG.5, the load balancing device may include a business service module, a sending and receiving module, and a performance screening module.

The business service module may receive an access request sent by a client, obtain a currently stored IP address of a server having the highest performance, and may send the IP address of the server to the client. Specifically, the IP address may be sent to the client via a redirect message, or may be sent to the client in response to receipt of an inquiry request from the client.

The sending and receiving module may perform information interaction with SLB devices, including: receive detection results of performance of servers sent by the SLB devices; send various instructions to the SLB device.

The detection results may include a performance parameter and a corresponding IP address of each server. The sending and receiving module may further receive a message sent from a SLB device indicating that a server has malfunctioned, or a message indicating that the server that has malfunctioned has been restarted.

The performance screening module may, according to performance parameters of servers received by the sending and receiving module, determine which of the servers has the highest performance through implementation of an algorithm for selecting the highest performing server, and store an IP address of the server having the highest performance to be called by the business service module.

Furthermore, the performance screening module may, according to a message received from a SLB device indicating that a server has malfunctioned received by the sending and receiving module, determine whether the server that has malfunctioned is the server with the highest performance. In response to a determination that the server that has malfunctioned is the server with the highest performance, re-determine which of the functioning servers has the highest performance according to performance parameters of the current servers. In response to a determination that the server that has malfunctioned is not the server with the highest performance, ignore the message sent by the SLB device indicating that a server has malfunctioned because the message may not influence the current services provided to clients by the GLB device. Similarly, the performance screening module may further, according to a message send by a SLB device indicating that the server that has malfunctioned has been restarted received by the sending and receiving module, re-determine which of the servers has the highest performance according to obtained performance parameters of current servers.

In addition, the load balancing device may further include a parameter setting module and a polling detection module.

The parameter setting module may send an instruction through the sending and receiving module to each SLB device to set detection parameters, in which each of the SLB devices is to detect the results of performance of the servers in a data center at which the SLB device is located according to the detection parameters.

The polling detection module may periodically send a request through the sending and receiving module to each of the SLB devices in turn to obtain the detection results of performance of the servers.

In examples of the present application, the detection and collection of performance data of servers may be achieved by taking each SLB device as an agent detector of a GLB device. Thus, the GLB device may not need to perform a large number of server detections, but instead, performance information of servers may be effectively obtained. Accordingly, performance of the GLB device may be improved through implementation of the methods and apparatuses disclosed herein.

The above examples may be implemented by hardware, software, firmware, or a combination thereof. For example, the various methods, processes and functional modules described herein may be implemented by a processor (the term processor is to be interpreted broadly to include a CPU, processing unit/module, ASIC, logic module, or programmable gate array, etc.). The processes, methods and functional modules may all be performed by a single processor or split between several processors; reference in this application or the claims to a 'processor' should thus be interpreted to mean 'one or more processors'. The processes, methods and functional modules are implemented as machine readable instructions executable by one or more processors, hardware logic circuitry of the one or more processors or a combination thereof. The modules, if mentioned in the aforesaid examples, may be combined into one module or further divided into a plurality of sub-modules. Further, the examples disclosed herein may be implemented in the form of a software product. The computer software product may be stored in a non-transitory storage medium and may include a plurality of instructions for making an electronic device implement the method recited in the examples of the present application.

The foregoing description, for purpose of explanation, has been described with reference to specific examples. However, the illustrative discussions above are not intended to be exhaustive or to limit the present application to the precise forms disclosed. Many modifications and variations are possible in view of the above teachings. The examples were chosen and described in order to best explain the principles of the present application and its practical applications, to thereby enable others skilled in the art to best utilize the present application and various examples with various modifications as are suited to the particular use contemplated.

## Claims

1. A method for load balancing among a plurality of servers, the method being applied to a Global Load Balancing (GLB) device (11, 12, 13) in a multi-data center (1, 2, 3) environment under which each data center (1, 2, 3) comprises at least one Server Load Balancing, SLB, device (22, 32), the method comprises:
receiving, by the GLB device (11, 12, 13), detection results of performance of a plurality of servers sent by each Server Load Balancing (SLB) device (22, 32), wherein the detection results comprise a performance parameter and a corresponding IP address of each server of the plurality of servers;
determining, by the GLB device (11, 12, 13), which server of the plurality of servers has a highest performance among the plurality of servers according to the performance parameters of the plurality of servers sent by the SLB devices (22, 32), and storing the IP address of the determined server; and
receiving, by the GLB device (11, 12, 13), an access request from a client, obtaining the stored IP address of the determined server, and sending the IP address of the determined server to the client;
wherein receiving detection results comprises:
sending, by the GLB device (11, 12, 13), an instruction to each SLB device (22, 32) to set detection parameters, the detection parameters comprising at least a detection method, wherein each SLB device is to:
perform an initialization configuration based on the detection parameters, and
detect the results of performance of the servers in a data center at which the SLB device is located according to the detection parameters; and
sending periodically, by the GLB device (11, 12, 13), a request to each SLB device (22, 32) in turn to obtain the detection results of performance of the servers

2. The method according to claim 1, wherein the plurality of servers are positioned at multiple data centers (1, 2, 3);
Wherein receiving, by the GLB device (11, 12, 13), detection results of performance of servers sent by each SLB device (22, 32) comprises:
receiving, by the GLB device (11, 12, 13), detection results of performance of the plurality servers sent by SLB devices (22, 32) in multiple data centers; or
receiving, by the GLB device, detection results of performance of servers sent by each SLB device in the data center where the GLB device is located, and synchronizing, by the GLB device, detection results of performance of servers sent by each SLB device in other data centers with other GLBs in other data centers.

3. The method according to claim 1, further comprising:
receiving, by the GLB device (11, 12, 13), a message sent from a SLB device indicating that a server has malfunctioned; and
determining, by the GLB device (11, 12, 13), whether the server that has malfunctioned is the server with the highest performance;
in response to a determination that the server that has malfunctioned is the server with the highest performance, determining which server of the plurality of servers has a second highest performance among the plurality of servers;
in response to a determination that the server that has malfunctioned is not the server with the highest performance, ignoring the message.

4. The method according to claim 3, further comprising:
receiving, by the GLB device (11, 12, 13), a message sent from a SLB device (22, 23) indicating that the server that has malfunctioned has been restarted.

5. The method according to claim 1, wherein sending the IP address of the determined server to the client comprises:
sending the IP address of the determined server to the client via a redirect message, or
sending the IP address of the determined server to the client in response to receipt of an inquiry request from the client.

6. A device for load balancing among a plurality of servers, the device is located in a Global Load Balancing (GLB) device (11, 12, 13) in a multi-data center (1, 2, 3) environment under which each data center comprises at least one Server Load Balancing (SLB) device (22, 23), the device comprising: a processor;
a memory on which is stored machine readable instructions that cause the processor to:
receive detection results of performance of servers sent by each SLB device (22, 23), wherein the detection results comprise a performance parameter and a corresponding IP address of each server of the plurality of servers;
determine which server of the plurality of servers has a highest performance among the plurality of servers according to the performance parameters of the plurality of servers sent by the SLB devices (22, ,23), and storing the IP address of the determined server;
receive an access request from a client;
obtain the stored IP address of the determined server; and send
the IP address of the determined server to the client;
wherein the machine readable instructions cause the processor to:
send an instruction to each SLB device (22, 23) to set detection parameters, the detection parameters comprising at least a detection method, wherein each SLB device is to:
perform an initialization configuration based on the detection parameters, and
detect results of performance of the servers in a data center at which the SLB device is located according to the detection parameters; and
periodically send a request to each SLB device (22, 23) in turn to obtain the detection results of performance of the servers.

7. The device according to claim 6, wherein the machine readable instructions are further to cause the processor to:
receive a message sent from a SLB device (22, 23) indicating that a server has malfunctioned;
determine whether the server that has malfunctioned is the server with the highest performance;
in response to a determination that the server that has malfunctioned is the server with the highest performance, re-determine a server with the highest performance according to performance parameters of the servers stored in the memory while omitting the server that has malfunctioned, and store an IP address of the server that is re-determined to have the highest performance in the memory; and
in response to a determination that the server that has malfunctioned is not the server with the highest performance, ignore the message.

8. The device according to claim 7, wherein the machine readable instructions are further to cause the processor to:
receive a message sent from a SLB device (22, 23) indicating that the server that has malfunctioned has been restarted;
re-determine a server with the highest performance according to performance parameters of the servers stored in the memory; and
store an IP address of the server that is re-determined in the memory.

9. The device according to claim 6, wherein to send the IP address to the client, the machine readable instructions are further to cause the processor to:
send the IP address of the determined server to the client via a redirect message, or
send the IP address of the determined server to the client in response to receipt of an inquiry request from the client.

## Patentansprüche

1. Verfahren zum Lastausgleich zwischen mehreren Servern, wobei das Verfahren auf eine GLB(*Global Load Balancing* - Globaler Lastausgleich)-Vorrichtung (11, 12, 13) in einer Multidatenzentrum(1, 2, 3)-Umgebung angewendet wird, in der jedes Datenzentrum (1, 2, 3) wenigstens eine SLB(*ServerLoad Balancing* - Server-Lastausgleich)-Vorrichtung (22, 32) umfasst, wobei das Verfahren Folgendes umfasst:
Empfangen, durch die GLB-Vorrichtung (11, 12, 13), von Erfassungsergebnissen einer Leistung mehrerer Server, die von jeder SLB(Server Load Balancing)-Vorrichtung (22, 32) gesendet werden, wobei die Erfassungsergebnisse einen Leistungsparameter und eine entsprechende IP-Adresse jedes Servers der mehreren Server umfassen;
Bestimmen, durch die GLB-Vorrichtung (11, 12, 13), welcher Server der mehreren Server eine höchste Leistung unter den mehreren Servern gemäß den Leistungsparametern der mehreren Server, die von den SLB-Vorrichtungen (22, 32) gesendet werden, aufweist, und Speichern der IP-Adresse des bestimmten Servers; und
Empfangen einer Zugriffsanforderung von einem Client durch die GLB-Vorrichtung (11, 12, 13),
Erhalten der gespeicherten IP-Adresse des bestimmten Servers und Senden der IP-Adresse des bestimmten Servers an den Client;
wobei das Empfangen von Erfassungsergebnissen Folgendes umfasst:
Senden, durch die GLB-Vorrichtung (11, 12, 13), einer Anweisung an jede SLB-Vorrichtung (22, 32), Erfassungsparameter einzustellen, wobei die Erfassungsparameter wenigstens ein Erfassungsverfahren umfassen, wobei jede SLB-Vorrichtung Folgendes durchführen soll:
Durchführen einer Initialisierungskonfiguration auf der Grundlage der Erfassungsparameter, und
Erfassen der Ergebnisse einer Leistung der Server in einem Datenzentrum, in dem sich die SLB-Vorrichtung befindet, gemäß den Erfassungsparametern; und
periodisches Senden einer Anforderung an jede SLB-Vorrichtung (22, 32) durch die GLB-Vorrichtung (11, 12, 13), wiederum die Erfassungsergebnisse einer Leistung der Server zu erhalten.

2. Verfahren nach Anspruch 1, wobei die mehreren Server an mehreren Datenzentren (1, 2, 3) angeordnet sind;
wobei das Empfangen, durch die GLB-Vorrichtung (11, 12, 13), von Erfassungsergebnissen einer Leistung von Servern, die durch jede SLB-Vorrichtung (22, 32) gesendet werden, Folgendes umfasst:
Empfangen, durch die GLB-Vorrichtung (11, 12, 13), von Erfassungsergebnissen einer Leistung der mehreren Server, die durch die SLB-Vorrichtungen (22, 32) in mehreren Datenzentren gesendet werden; oder
Empfangen, durch die GLB-Vorrichtung, von Erfassungsergebnissen einer Leistung von Servern, die durch jede SLB-Vorrichtung in dem Datenzentrum, in dem sich die GLB-Vorrichtung befindet, gesendet werden, und
Synchronisieren, durch die GLB-Vorrichtung, von Erfassungsergebnissen einer Leistung von Servern, die von jeder SLB-Vorrichtung in anderen Datenzentren gesendet worden sind, mit anderen GLBs in anderen Datenzentren.

3. Verfahren nach Anspruch 1, ferner Folgendes umfassend:
Empfangen, durch die GLB-Vorrichtung (11, 12, 13), einer von einer SLB-Vorrichtung gesendeten Nachricht, die anzeigt, dass ein Server versagt hat; und
Bestimmen, durch die GLB-Vorrichtung (11, 12, 13), ob der Server, der versagt hat, der Server mit der höchsten Leistung ist;
als Reaktion auf ein Bestimmen, dass der Server, der versagt hat, der Server mit der höchsten Leistung ist, Bestimmen, welcher Server der mehreren Server eine zweithöchste Leistung unter den mehreren Server aufweist;
als Reaktion auf ein Bestimmen, dass der Server, der versagt hat, nicht der Server mit der höchsten Leistung ist, Ignorieren der Nachricht.

4. Verfahren nach Anspruch 3, ferner Folgendes umfassend:
Empfangen, durch die GLB-Vorrichtung (11, 12, 13), einer von einer SLB-Vorrichtung (22, 23) gesendeten Nachricht, die anzeigt, dass der Server, der versagt hat, erneut gestartet worden ist.

5. Verfahren nach Anspruch 1, wobei das Senden der IP-Adresse des bestimmten Servers an den Client Folgendes umfasst:
Senden der IP-Adresse des bestimmten Servers an den Client über eine Umleitungsnachricht
oder Senden der IP-Adresse des bestimmten Servers an den Client als Reaktion auf ein Empfangen einer Abfrageanforderung von dem Client.

6. Vorrichtung zum Lastausgleich zwischen mehreren Servern, wobei sich die Vorrichtung in einer GLB(*Global Load Balancing*)-Vorrichtung (11, 12, 13) in einer Multidatenzentrum(1, 2, 3)-Umgebung befindet, in der jedes Datenzentrum wenigstens eine SLB(S*erver Load Balancing*)-Vorrichtung (22, 23) umfasst, wobei die Vorrichtung Folgendes umfasst: einen Prozessor; einen Speicher, auf dem maschinenlesbare Anweisungen gespeichert sind, die bewirken, dass der Prozessor Folgendes durchführt:
Empfangen von Erfassungsergebnissen einer Leistung von Servern, die von jeder SLB-Vorrichtung (22, 23) gesendet werden, wobei die Erfassungsergebnisse einen Leistungsparameter und eine entsprechende IP-Adresse jedes Servers der mehreren Server umfassen;
Bestimmen, welcher Server der mehreren Server eine höchste Leistung unter den mehreren Servern gemäß den Leistungsparametern der mehreren Server, die von den SLB-Vorrichtungen (22, 23) gesendet werden, aufweist, und Speichern der IP-Adresse des bestimmten Servers;
Empfangen einer Zugriffsanforderung von einem Client;
Erhalten der gespeicherten IP-Adresse des bestimmten Servers; und Senden
der IP-Adresse des bestimmten Servers an den Client;
wobei die maschinenlesbaren Anweisungen bewirken, dass der Prozessor Folgendes ausführt:
Senden einer Anweisung an jede SLB-Vorrichtung (22, 23), Erfassungsparameter einzustellen, wobei die Erfassungsparameter wenigstens ein Erfassungsverfahren umfassen, wobei jede SLB-Vorrichtung Folgendes durchführen soll:
Durchführen einer Initialisierungskonfiguration auf der Grundlage der Erfassungsparameter,
und
Erfassen von Ergebnissen einer Leistung der Server in einem Datenzentrum, in dem sich die SLB-Vorrichtung befindet, gemäß den Erfassungsparametern; und periodisches Senden einer Anforderung an jede SLB-Vorrichtung (22, 23), wiederum die Erfassungsergebnisse einer Leistung der Server zu erhalten.

7. Vorrichtung nach Anspruch 6, wobei die maschinenlesbaren Anweisungen ferner bewirken sollen, dass der Prozessor Folgendes ausführt:
Empfangen einer Nachricht, die von einer SLB-Vorrichtung (22, 23) gesendet worden ist, die anzeigt, dass ein Server versagt hat;
Bestimmen, ob der Server, der versagte, der Server mit der höchsten Leistung ist;
als Reaktion auf ein Bestimmen, dass der Server, der versagt hat, der
Server mit der höchsten Leistung ist, Neubestimmen eines Servers mit der höchsten Leistung gemäß Leistungsparametern der in dem Speicher gespeicherten Server, während der Server, der versagt hat, ausgelassen wird, und Speichern einer IP-Adresse
des Servers, von dem neu bestimmt worden ist, dass er die höchste Leistung in dem Speicher aufweist;
und
als Reaktion auf ein Bestimmen, dass der Server, der versagt hat, nicht der Server mit der höchsten Leistung ist, Ignorieren der Nachricht.

8. Vorrichtung nach Anspruch 7, wobei die maschinenlesbaren Anweisungen ferner bewirken sollen, dass der Prozessor Folgendes durchführt:
Empfangen einer Nachricht, die von einer SLB-Vorrichtung (22, 23) gesendet worden ist und die anzeigt, dass der Server,
der versagt hat, erneut gestartet worden ist;
Neubestimmen eines Servers mit der höchsten Leistung gemäß Leistungsparametern der in dem Speicher gespeicherten Server; und Speichern einer IP-Adresse des Servers, der neu bestimmt worden ist, im Speicher.

9. Vorrichtung nach Anspruch 6, wobei die maschinenlesbaren Anweisungen zum Senden der IP-Adresse an den Client ferner bewirken sollen, dass der Prozessor Folgendes durchführt:
Senden der IP-Adresse des bestimmten Servers an den Client über eine Umleitungsnachricht, oder
Senden der IP-Adresse des bestimmten Servers an den Client als Reaktion auf ein Empfangen einer Abfrageanforderung von dem Client.

## Revendications

1. Procédé d'équilibrage de charge parmi une pluralité de serveurs, le procédé étant appliqué à un dispositif d'équilibrage de charge globale (GLB) (11, 12, 13) dans un environnement de plusieurs centre de données (1, 2, 3) dans lequel chaque centre de données (1, 2, 3) comprend au moins un dispositif d'équilibrage de charge de serveur SLB (22, 32), le procédé comprenant :
la réception, par le dispositif GLB (11, 12, 13), des résultats de détection de performance d'une pluralité de serveurs envoyés par chaque dispositif d'équilibrage de charge de serveur (SLB) (22, 32), dans lequel les résultats de détection comprennent un paramètre de performance et une adresse IP correspondante de chaque serveur de la pluralité de serveurs ;
la détermination, par le dispositif GLB (11, 12, 13), du serveur de la pluralité de serveurs ayant une performance la plus élevée parmi la pluralité de serveurs selon des paramètres de performance de la pluralité de serveurs envoyés par les dispositifs SLB (22, 32), et le stockage de l'adresse IP du serveur déterminé ; et
la réception, par le dispositif GLB (11, 12, 13), d'une demande d'accès d'un client,
l'obtention de l'adresse IP stockée du serveur déterminé et l'envoi de l'adresse IP du serveur déterminé au client ;
dans lequel la réception des résultats de détection comprend :
l'envoi, par le dispositif GLB (11, 12, 13), d'une instruction à chaque dispositif SLB (22, 32) pour définir des paramètres de détection, les paramètres de détection comprenant au moins un procédé de détection, dans lequel chaque dispositif SLB doit :
effectuer une configuration d'initialisation sur la base des paramètres de détection, et
détecter les résultats de performance des serveurs dans un centre de données dans lequel se trouve le dispositif SLB selon des paramètres de détection ; et
l'envoi périodique, par le dispositif GLB (11,12, 13), d'une demande à chaque dispositif SLB (22, 32) à son tour pour obtenir les résultats de détection de performance des serveurs.

2. Procédé selon la revendication 1, dans lequel la pluralité de serveurs sont positionnés au niveau de plusieurs centres de données (1,2, 3) ;
dans lequel la réception, par le dispositif GLB (11, 12, 13), de résultats de détection de performance de serveurs envoyés par chaque dispositif SLB (22, 32) comprend :
la réception, par le dispositif GLB (11, 12, 13), de résultats de détection de performance des serveurs de la pluralité de serveurs envoyés par des dispositifs SLB (22, 32) dans plusieurs centres de données ; ou
la réception, par le dispositif GLB, de résultats de détection de performance de serveurs envoyés par chaque dispositif SLB dans le centre de données dans lequel se trouve le dispositif GLB, et la synchronisation, par le dispositif GLB, de résultats de détection de performance de serveurs envoyés par chaque dispositif SLB dans d'autres centres de données avec d'autres GLB dans d'autres centres de données.

3. Procédé selon la revendication 1, comprenant en outre :
la réception, par le dispositif GLB (11, 12, 13), d'un message envoyé par un dispositif SLB indiquant qu'un serveur a mal fonctionné ; et
le fait de déterminer, par le dispositif GLB (11, 12, 13), si le serveur qui a mal fonctionné est le serveur ayant la performance la plus élevée ;
en réponse à une détermination selon laquelle le serveur qui a mal fonctionné est le serveur ayant la performance la plus élevée, le fait de déterminer quel serveur de la pluralité de serveurs présente une seconde performance la plus élevée parmi la pluralité de serveurs ;
en réponse à une détermination selon laquelle le serveur qui a mal fonctionné n'est pas le serveur ayant la performance la plus élevée, le fait de ne pas tenir compte du message.

4. Procédé selon la revendication 3, comprenant en outre :
la réception, par le dispositif GLB (11, 12, 13), d'un message envoyé depuis un dispositif SLB (22, 23) indiquant que le serveur qui a mal fonctionné a été redémarré.

5. Procédé selon la revendication 1, dans lequel l'envoi de l'adresse IP du serveur déterminé au client comprend :
l'envoi de l'adresse IP du serveur déterminé au client via un message de redirection, ou
l'envoi de l'adresse IP du serveur déterminé au client en réponse à la réception d'une demande d'interrogation du client.

6. Dispositif d'équilibrage de charge parmi une pluralité de serveurs, le dispositif se trouve dans un dispositif d'équilibrage de charge globale (GLB) (11, 12, 13) dans un environnement de plusieurs centres de données (1, 2, 3) dans lequel chaque centre de données comprend au moins un dispositif d'équilibrage de charge de serveur (SLB) (22, 23), le dispositif comprenant : un processeur ;
une mémoire sur laquelle sont stockées des instructions lisibles par machine qui amènent le processeur à :
recevoir des résultats de détection de performance de serveurs envoyés par chaque dispositif SLB (22, 23), dans lequel les résultats de détection comprennent un paramètre de performance et une adresse IP correspondante de chaque serveur de la pluralité de serveurs ;
déterminer quel serveur de la pluralité de serveurs présente une performance la plus élevée parmi la pluralité de serveurs selon des paramètres de performance de la pluralité de serveurs envoyés par les dispositifs SLB (22, 23), et stocker l'adresse IP du serveur déterminé ;
recevoir une demande d'accès d'un client ;
obtenir l'adresse IP stockée du serveur déterminé ; et
envoyer l'adresse IP du serveur déterminé au client ;
dans lequel les instructions lisibles par machine amènent le processeur à :
envoyer une instruction à chaque dispositif SLB (22, 23) pour définir des paramètres de détection, les paramètres de détection comprenant au moins un procédé de détection, dans lequel chaque dispositif SLB doit :
effectuer une configuration d'initialisation sur la base des paramètres de détection, et
détecter des résultats de performance des serveurs dans un centre de données dans lequel se trouve le dispositif SLB selon des paramètres de détection ; et
envoyer périodiquement une demande à chaque dispositif SLB (22, 23) à son tour pour obtenir les résultats de détection de performance des serveurs.

7. Dispositif selon la revendication 6, dans lequel les instructions lisibles par machine doivent en outre amener le processeur à:
recevoir un message envoyé depuis un dispositif SLB (22, 23) indiquant qu'un serveur a mal fonctionné ;
déterminer si le serveur qui a mal fonctionné est le serveur ayant la performance la plus élevée ;
en réponse à une détermination selon laquelle le serveur qui a mal fonctionné est le serveur ayant la performance la plus élevée, déterminer à nouveau un serveur ayant la performance la plus élevée selon des paramètres de performance des serveurs stockés dans la mémoire tout en omettant le serveur qui a mal fonctionné, et stocker une adresse IP du serveur qui est déterminé à nouveau comme présentant la performance la plus élevée dans la mémoire ; et
en réponse à une détermination selon laquelle le serveur qui a mal fonctionné n'est pas le serveur ayant la performance la plus élevée, ne pas tenir compte du message.

8. Dispositif selon la revendication 7, dans lequel les instructions lisibles par machine doivent en outre amener le processeur à :
recevoir un message envoyé depuis un dispositif SLB (22, 23) indiquant que le serveur qui a mal fonctionné a été redémarré ;
déterminer à nouveau un serveur ayant la performance la plus élevée selon des paramètres de performance des serveurs stockés dans la mémoire ; et
stocker une adresse IP du serveur qui est déterminé à nouveau dans la mémoire.

9. Dispositif selon la revendication 6, dans lequel pour envoyer l'adresse IP au client, les instructions lisibles par machine doivent en outre amener le processeur à :
envoyer l'adresse IP du serveur déterminé au client via un message de redirection, ou
envoyer l'adresse IP du serveur déterminé au client en réponse à la réception d'une demande d'interrogation du client.
